# EUROPÄISCHE PATENTSCHRIFT

(11) **EP 2 473 436 B1**
(45) Veröffentlichungstag und Bekanntmachung des Hinweises auf die Patenterteilung: **25.03.2015**
(21) Anmeldenummer: 10724283.6
(22) Anmeldetag: 21.05.2010
(51) Int. Cl.: B67C 3/24, B65G 47/84, B65G 47/90

(54) **HALTESPANGE MIT EINER KLAMMER ZUM ERGREIFEN VON FLASCHENHÄLSEN**
RETAINING BRACE HAVING A CLAMP FOR GRASPING BOTTLE NECKS
ETRIER DE RETENUE MUNI D'UNE PINCE DESTINÉE À SAISIR DES COLS DE BOUTEILLES

(30) Priorität: 31.08.2009 DE 102009038987
(43) Veröffentlichungstag der Anmeldung: 11.07.2012
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2010/003149
(87) Internationale Veröffentlichungsnummer: WO 2011/023253

(56) Entgegenhaltungen:
- WO-A1-2010/060499
- DE-A1-102006 012 020
- DE-B3-102008 019 766

## Beschreibung

Die Erfindung richtet sich auf eine Haltespange mit einer Klammer zum Ergreifen von Flaschenhälsen, insbesondere von PET-Flaschen, gemäß dem Oberbegriff des Anspruchs 1 und wie aus der DE 10 2008 019 766 B3 bekannt.

Eine Klammer ist in der am 20.05.2010 veröffentlichten Anmeldung DE 10 2008 055 617 der Anmelderin beschrieben.

Wie dort beschrieben, gibt es derartige Klammern in sehr unterschieblichen Ausgestaltungen. So zeigt beispielsweise die DE 10 2006 012 020 A1 ein Klammerpaar. wobei die beiden Klammerarme in ungetrennte Achsen schwenkbar sind und die Schließkraft mittels einer Feder in Schließstellung gehalten wird. Da derartige Federetemente häufig den an Flaschenabfüllanlagen geforderten Forderungen der Hygiene nicht gerecht werden, ist man bemüht, andere Schließmechanismen vorzuschlagen. So sieht in einer aufwändigen Gestaltung die DE 10 2005 041 929 A1 Dauermagnete vor, die in unterschiedlichen Paarungen sowohl das Schließen als auch das Öffnen unterstützen. In dieser Lösung sind die Dauermagneten außerhalb der Klammergreifarme positioniert.

Zur Unterstützung der Öffnungskraft der Klammern sieht eine Lösung nach der DE 20 2005 002 924 U1 oder der DE 10 2005 014 838 A1 vor, dass zwischen Greifbereich der Klammern und Schwenkachsen sich abstoßende Magneten positioniert sind.

Die Aufgabe der vorliegenden Erfindung besteht darin, insbesondere den Anwendungsbereich von entsprechenden Klammern bzw. Clipsen zu erweitern, indem diese nicht nur für leere Behälter geeignet sein sollen, sondern auch für gefüllte Flaschen oder andere Aufnahmebehälter mit entsprechender Halsgestaltung, so dass diese Klammern zusätzlich in Füller und Transfersternen zwischen Füller und Verschließer eingesetzt werden können.

Eine derartige Aufgabe wird nach der Erfindung durch die Merkmale des Hauptanspruches gelöst.

Durch das Vorsehen eines Schwenkkörper mit einem unter die Klammer greifenden Ansatz wird ein zusätzliches Sicherungselement bereitgestellt, so dass auch schwerere Objekte aufgenommen werden können, ohne dass die Gefahr des Lösens der Klammern aus der entsprechenden Dreh- bzw. Fördereinrichtung möglich wird. Zusätzlich wird die Montageweise in Form eines Stecksystems optimal beibehalten.

Zur Verstärkung der Haltekräfte sieht die Erfindung in Ausgestaltung vor, dass im spangenartigen Ansatz ein Dauermagnet vorgesehen ist, der in der Gebrauchslage koaxial zur Drehhülse der Klammer positionierbar ist und mit dem Dauermagneten in der Klammer zusammenwirkt.

Die Erfindung sieht in Ausgestaltung auch vor, dass an dem Schwenkkörper auf der dem spangenartigen Ansatz gegenüberliegenden Seite ein weiterer Ansatz mit einem Dauermagneten vorgesehen ist, der zur Stabilisierung der Klammer in der Gebrauchslage dient.

Die Erfindung weist, wie oben schon angedeutet, einige besondere Vorteile auf. Die Flaschenklammern sind z.B. ohne Werkzeug schnell auswechselbar, sie sind gut zu reinigen, kostengünstig nachrüstbar und können als Standardteilevielseitig verwendet werden an unterschiedlichsten Anlageelementen, wie im Stern, dem Rinser, dem Transferstern im Füller und dem Stern vor dem Verschließer, was zur erheblichen Kosteneinsparung führt. Zusätzlich wird die Klammer magnetisch immer in die Sperrlage verschwenkt, so dass Maschinenschäden durch Fehlbedienung ausgeschlossen werden können.

Weitere Einzelheiten, Merkmale und Vorteile der Erfindung ergeben sich aufgrund der nachfolgenden Beschreibung sowie anhand der Zeichnung. Diese zeigt in
Fig. 1 die Unteransicht eines Förderelementes mit erfindungsgemäßer Klammer und einer aufgenommenen Flasche,
Fig. 2 eine Unteransicht in räumlicher Darstellung mit Klammer ohne Flasche mit weggeschwenktern spangenförmigen Einsatz sowie in
Fig. 3a und 3b einen Schnitt gemäß Linie III-III in Fig. 2 durch die Haltespange in zwei unterschiedlichen Positionen des Sicherungsansatzes.

An einem Maschinenelement, wie ein Stern z.B, das beispielsweise ein Element eines Füllers, eines Verschließers od. dgl. darstellen kann, worauf es hier nicht näher ankommt, sind die erfindungsgemäßen Klammern 2 von unten auferste Dreh- und Haltebolzen aufgeschoben, die in Drehhülsen 3 eintauchen.

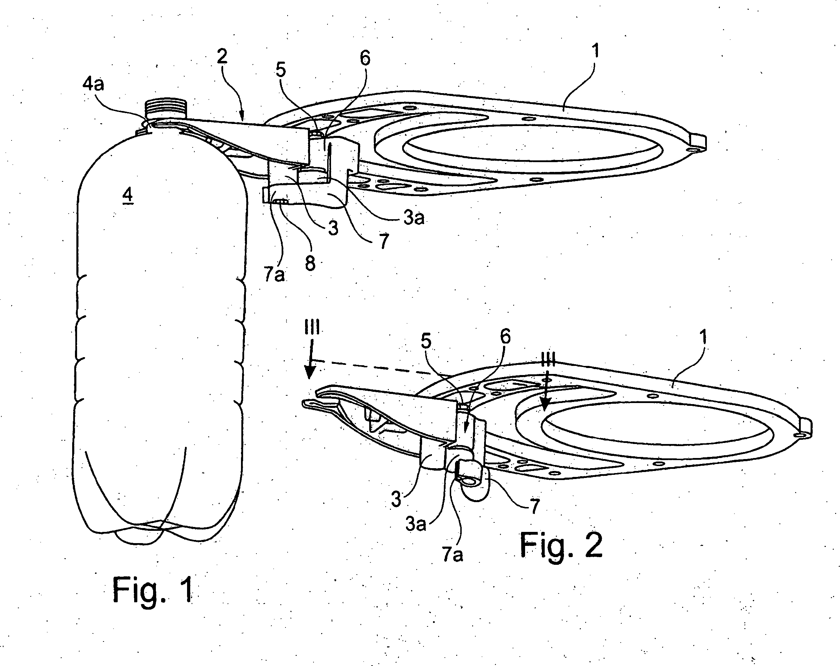

Die Klammer 2 ist beispielsweise zum Transport einer PET-Flasche 4 ausgetegt, sie kann aber auch andere Behälter greifen und fördern, wobei sie die entsprechenden Hälse, in Fig. 1 mit 4a bezeichnet, ergreift. Am Maschinenelement 1 ist ein zweiter Dreh- und Haltebolzen 5 fixiert, der von einer schwenkbaren Hülse 6 umgriffen wird, an der eine Spange 7 angeformt ist, die mit ihrem freien Ansatz 7a. der ggf. mit einem Dauermagneten 8 ausgerüstet ist, unter die Drehhülse 3, die der Klammer 2 zugeordnet ist, verschwenkt ist. Die beiden Schwenkpositionen ergeben sich aus den Fig. 1 und 2.

Die Drehhülse 3 der Klammer weist einen einstückig angeformten Ansatz 3a auf, der wiederum mit einem Dauermagneten ausgerüstet sein kann, um mit dem Haltebolzen 5 bzw. der entsprechenden Hülse zusammenzuwirken, die ihrerseits wiederum einen Dauermagneten beinhalten kann.

Die Klammer 2 mit ihrer Drehhülse 3 und dem angeformten Ansatz 3a wird bei der Montage von unten über den entsprechenden Dreh- und Haltebolzen am Mäschinenelement 1 geschoben, nachdem der Schwenkkörper 6 über den zweiten Dreh-und Haltebolzen 5 am Maschinenelement geschoben wurde. Zur Fixierung wird dann der freie Ansatz 7a unter die Drehhülse 3 der Klammer 2 verschwenkt, wie sich dies aus Fig. 1 ergibt, um eine zusätzliche Haltekraft gegen Abrutschen der Klammer 2 aufzubringen.

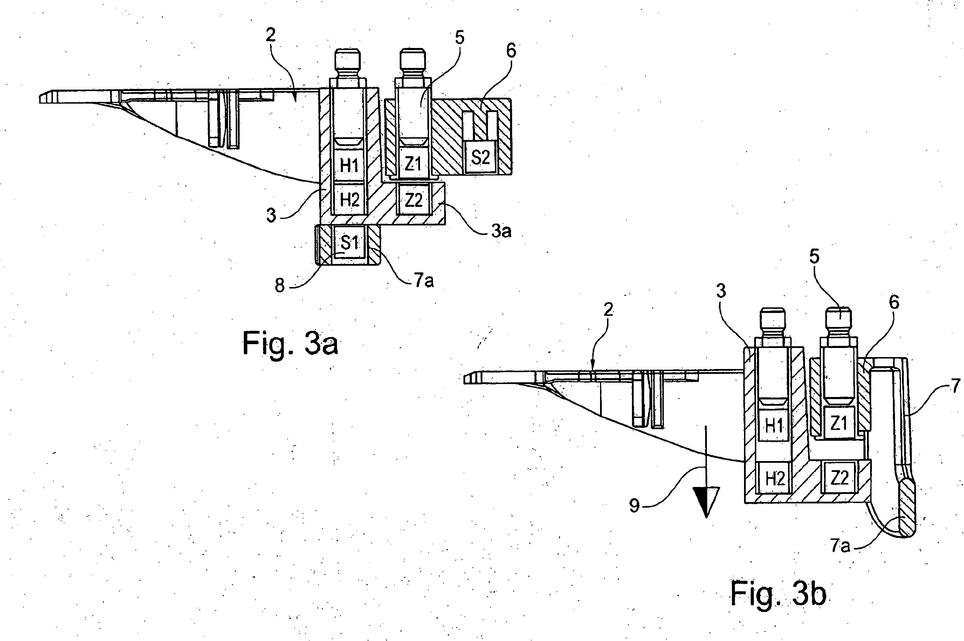

In den Fig. 3a und 3b sind die beiden aus Fig. 1 und Fig. 2 ersichtlichen Positionen des Schwenkkörpers 6 mit Spange 7 und freiem Ansatz 7a im Schnitt dargestellt mit Angabe der ggf. vorgesehenen unterschiedlichen Magnete.

In Fig. 3a ist die durch die Spange erfolgte Verriegelungsstellung dargestellt. Der Magnet H1 sitzt fest in einer entsprechenden Hülse am nicht näher dargestellten Stern, der Magnet H2 sitzt fest in der Klammer 2, die beide entsprechend anziehend die Klammer 2 halten. Reicht diese Fixierung bereits aus, um die Klammer selbst mit leeren Flaschen zu halten, so ist zur Ausübung einer größeren Haltekraft der freie Ansatz 7a mit einem Dauemagneten 8 bzw. "S1" unter die Drehhülse 3 geschwenkt und vermag damit eine zusätzliche Haltekraft auszuüben. Dieser Magnet S1 sitzt fest in dem freien Ansatz 7a der Spange 7 in Sperrposition.

In Fig. 3b ist die Situation gemäß Fig. 2 dargestellt, bei der die Spange 7 mit Ansatz 7a weggeschwenkt ist, so dass die Drehhülse 3 mit der Klammer 2 nach unten abgezogen werden kann, z.B. zu Wartungsarbeiten od. dgl. Die Abziehmöglichkeit nach unten ist durch einen Pfeil 9 angedeutet

Natürlich ist das beschriebene Ausführungsbeispiel der Erfindung noch in vielfacher Hinsicht abzuändern, ohne den Grundgedanken zu verlassen. So kann beispielsweise der Ansatz 7a der Spange 7 ohne Dauermagnet 8 gestaltet sein und so geformt sein, dass er von unten die Drehhülse 3 der Klammer 2 sichert.

### Bezugszeichenliste:

- 1: Stern (Maschinenelement, Transferstern etc.)
- 2: Klammer
- 3: Drehhülsen
- 4: PET-Flasche
- 4a: Flaschenhals
- 5: Zweiter Dreh- und Haltebolzen
- 6: Schwenkkörper
- 7, 7a: Spange, freier Ansatz
- 8: Dauermagnet

## Patentansprüche

1. Haltespange mit einer Klammer (2) mit Klammerarmen zum Ergreifen von Flaschenhälsen (4a), insbesondere von PET-Flaschen (4), in Flaschenabfüllanlagen mit den Merkmalen;
- die Klammerarme sind in horizontaler Ebene verschwenkbar, wobei die Klammer (2) eine Drehhülse (3) zum Übergreifen eines in die Drehhülse von oben eingreifenden ersten Dreh- und Haltebolzens an einen Stern (1) oder dergleichen aufweist,
gekennzeicht durch die Merkmale:
- der erste Dreh- und Haltebolzen ist mit einem magnetisierbaren (H1) oder magnetischfreien Ende ausgestattet,
- im unteren Bereich der Drehhülse (3) ist ein mit dem ersten Dreh- und Haltebolzen zusammenwirkender Dauermagnet (H2) positioniert,
- am Stern (1) oder dergleichen ist ein zweiter Dreh- und Haltebolzen (5) parallel zum ersten Dreh- und Haltebolzen mit einem eine anziehende Kraft ausübenden Dauermagneten (Z1) oder einem von einem Magneten beeinflussbaren Bereich an seinem freien Ende zur Zentrierung und Rückstellung der Klammer vorgesehen,
- dieser zweite Dreh- und Haltebolzen (5) ist von einem Schwenkkörper (6) umgeben, indem eine Spange (7) angeformt ist, die mit einerm freien und in der Gebrauchslage unter die Klammer (2) greifenden Ansatz (7a) versehen ist.

2. Haltespange nach Anspruch 1, **dadurch gekennzeichnet, dass** im freien Ansatz (7a) ein Dauermagnet (8, S1) vorgesehen ist, der in der Gebrauchslage koaxial zur Drehhülse (3) der Klammer (2) positionierbar ist und mit dem Dauermagneten (H2) in der Klammer (2) zusammenwirkt.

3. Haltespange nach Anspruch 1 oder 2, **dadurch gekennzeichnet, dass** an dem Schwenkkörper (6) auf der dem Ansatz (7a) gegenüberliegenden Seite ein weiterer Ansatz mit einem Dauermagneten vorgesehen ist, der zur Stabilisierung der Klammer in der Gebrauchslage dient.

## Claims

1. Retaining brace having a clamp (2) with clamp arms for grasping bottle necks (4a), in particular of PET bottles (4), in bottling plants wherein:
- the clamp arms can be pivoted in the horizontal plane, wherein the clamp comprises a pivotable sleeve (3) for engaging over a first rotating and retaining pin (5), which engages into the sleeve from above, at a star (1) or the like,
**characterised in that**
- the first rotating and retaining pin is equipped with a magnetizable (H1) or magnetic-free end,
- positioned in the lower area of the pivotable sleeve (3) is a permanent magnet (H2), which interacts with the first rotating and retaining pin (5),
- at the star (1) or the like, a second rotating and retaining pin (5) is provided, parallel to the first rotating and retaining pin, having a permanent magnet (Z1) that exerts an attraction force, or a magnetizably influenced area on the free end thereof, to centre and restore the clamp,
- this second rotating and retaining pin (5) is surrounded by a pivotable body (6) wherein a brace (7) is formed , which is fitted with a free projection (7a) engaging under the clamp (2) in the position of use.

2. Retaining brace according to claim 1, **characterised in that** a permanent magnet (8, S1) is provided in the free projection (7a), which in the position of use can be positioned coaxially to the pivotable sleeve (3) of the clamp (2) and interacts with the permanent magnet (H2) of the clamp (2).

3. Retaining brace according to claim 1 or 2, **characterized in that**, on the pivoting body (6) on the side opposite the first projection (7a), a further projection is provided, with a permanent magnet, which serves to stabilize the clamp in the position of use.

## Revendications

1. Etrier de retenue avec une pince (2) présentant des bras de pince pour saisir des cols de bouteilles (4a), en particulier de bouteilles en PET (4), dans des installations de remplissage de bouteilles avec les caractéristiques suivantes :
- les bras de pince peuvent pivoter dans le plan horizontal, la pince (2) présentant une douille rotative (3) pour recouvrir un premier boulon de rotation et de retenue s'engageant par le haut dans la douille rotative sur une étoile (1) ou similaires,
**caractérisé par** les caractéristiques suivantes :
- le premier boulon de rotation et de retenue est équipé d'une extrémité magnétisable (H1) ou non magnétique,
- un aimant permanent (H2) coagissant avec le premier boulon de rotation et de retenue est positionné dans la zone inférieure de la douille rotative (3),
- un second boulon de rotation et de retenue (5) est prévu sur l'étoile (1) ou similaires parallèlement au premier boulon de rotation et de retenue avec un aimant permanent (21) exerçant une force d'attraction ou une zone influençable par un aimant sur son extrémité libre pour le centrage et le rappel de la pince,
- ce second boulon de rotation et de retenue (5) est entouré par un corps pivotant (6), dans lequel est formé un étrier (7) qui est pourvu d'une saillie libre (7a) venant en prise sous la pince (2) dans la position d'utilisation.

2. Etrier de retenue selon la revendication 1, **caractérisé en ce qu'**un aimant permanent (8, 51) est prévu dans la saillie libre (7a), lequel peut être positionné dans la position d'utilisation coaxialement à la douille rotative (3) de la pince (2) et coagit avec l'aimant permanent (H2) dans la pince (2).

3. Etrier de retenue selon la revendication 1 ou 2, **caractérisé en ce qu'**une autre saillie avec un aimant permanent est prévue sur le corps pivotant (6) sur le côté en regard de la saillie (7a), lequel sert à la stabilisation de la pince dans la position d'utilisation.
